# EUROPEAN PATENT APPLICATION

(11) **EP 2 618 326 A1**
(43) Date of publication of application: **24.07.2013**
(21) Application number: 11824821.0
(22) Date of filing: 18.03.2011
(51) Int. Cl.: G09G 5/00, G09G 3/20, G09G 5/14, G09G 5/377, H04M 1/73

(54) **PORTABLE TERMINAL, METHOD FOR CONTROLLING SAME, AND PROGRAM**

(30) Priority: 15.09.2010 JP 2010207005
(71) Applicant: NEC Corporation, Tokyo 108-8001 (JP); NEC Embedded Products, Ltd., Minato-ku Tokyo 108-0073 (JP)
(72) Inventor: TAMURA, Norimasa, Tokyo 141-0032 (JP)
(74) Representative: Vossius & Partner
(86) International application number: PCT/JP2011/056543
(87) International publication number: WO 2012/035809

(57) **Abstract**

The problem addressed by the present invention is to increase usability at the same time as causing the usable time to be a long period of time in a portable terminal that is battery driven and that is mounted with two image display devices. The dual-screen portable terminal (1) includes two displays that are a left display (111) and a right display (121), and includes a display control means (101) that performs control that turns off one of the two displays when the remaining battery power becomes at or below a predetermined remaining power, and combines the display screen of the display that was turned off with the display screen of the display that was not turned off, resulting in an aggregated displaying.

## Description

### TECHNICAL FIELD

The present invention relates to a portable terminal, a control method and a program, in particular, to technology for prolonging the available time of the portable terminal which loads dual-screen display devices and is powered by battery.

### BACKGROUND ART

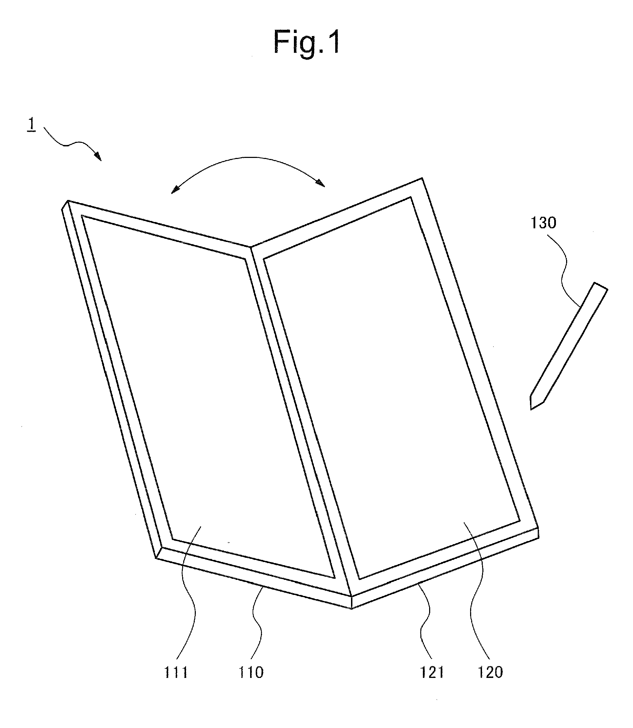

In a technical field of a portable information terminal (hereinafter, referred to as "portable terminal"), there is a need called miniaturization of the terminal size. On the one hand, there is a need called expansion of an information display area in the technical field. Those two needs seem to be difficult in compatibility. However, for example, it is able to realize the expansion of the information display area by loading the screens on two cases respectively, and realize the miniaturization by enabling the facing and folding these dual-screen by hinge mechanism. An external appearance example of such portable terminal is illustrated in Fig. 1. As an example in which the portable terminal with the similar external appearance is disclosed, patent document 1 is mentioned.

Not limited to the portable terminals with dual-screen, it is well known that the battery operating time of portable terminals is one of life lines in marketability and usability. The battery consumption may also greatly depend on the power consumption of the screen display device (LCD: Liquid Crystal Display and organic EL display). As invention made from such view point, patent document 2 is mentioned, for example. Patent document 2 discloses the control of brightness or the like of a display panel based on the battery residual quantity in an electronic apparatus which drives a display panel using a battery as a power supply.

### [Patent document]

[Patent document 1] Japanese Patent Application Laid-Open No. 2006-113501
[Patent document 2] Japanese Patent Application Laid-Open No. 2009-009183

### SUMMARY OF THE INVENTION

### [PROBLEM TO BE SOLVED BY THE INVENTION]

However, there is no description in detail concerning to the suppression of the battery power consumption by the control of the display mode and brightness of dual-screen depending on the use scene and the battery residual quantity in the portable terminal having dual-screen display devices.

When the performances of the screen display device and the indication areas are equal, it is natural that the electric power consumption of a portable terminal loading dual-screen display devices simply becomes double compared with a portable terminal loading one screen display device. Therefore, the influence to the battery driving time of the electric power that the screen display device consumes is also large in the portable terminal loading dual-screen display devices. For this issue, it is considered to cope with increasing the battery capacity. However, in consideration of the impact for the terminal weight and the external size, the point that the merchantability is injured is a problem.

The present invention has been made in consideration of the above-mentioned actual circumstances, and aims to provide a portable terminal with improved usability as well as longer usable time, a control method and a program in a portable terminal which loads dual-screen display devices and works with battery drive.

### [MEANS FOR SOLVING A PROBLEM]

In order to achieve the above-mentioned object, as the first example, the present invention provides a portable terminal which is a portable terminal including two displays and is characterized by including a display control unit which performs control that turns off any one of said two displays when the battery residual quantity becomes no more than the predetermined remaining amount and performs a consolidating display of a display screen of the display that was turned off together with a display screen of the display that was not turned off.

In order to achieve the above-mentioned object, as the second example, the present invention provides a control method which is a control method of a portable terminal including two displays and is characterized by including a processing to turn off any one of said two displays when the battery residual quantity becomes no more than the predetermined remaining amount, and a processing to performs a consolidating display of a display screen of the display that was turned off together with a display screen of the display that was not turned off.

In order to achieve the above-mentioned object, as the third example, the present invention provides a control program which is a control program of a portable terminal including two displays and is characterized to make said portable terminal carry out a processing to turn off any one of said two displays when the battery residual quantity was no more than the predetermined remaining amount,
and a processing to performs a consolidating display of a display screen of the display that was turned off together with a display screen of the display that was not turned off.

### [EFFECT OF THE INVENTION]

According to the present invention, it is enabled to provide a portable terminal with improved usability as well as longer usable time, a control method of it and a program, in a portable terminal which loads dual-screen display devices and works with battery drive.

### BRIEF DESCRIPTION OF THE DRAWINGS

Fig. 1 is a figure which shows an external appearance example of an exemplary embodiment of the present invention.
Fig. 2 is a block diagram which shows functional constitution of this exemplary embodiment.
Fig. 3 is a flowchart which shows a control procedure of screen display in this exemplary embodiment.
Fig. 4 is a figure (part 1) which shows a screen example of display in this exemplary embodiment.
Fig. 5 is a figure (part 2) which shows a screen example of display in this exemplary embodiment.
Fig. 6 is a figure (part 3) which shows a screen example of display in this exemplary embodiment.

### EXEMPLARY EMBODIMENTS FOR CARRYING OUT OF THE INVENTION

An external appearance example of the exemplary embodiment of the present invention is shown in Fig. 1.

A dual-screen portable terminal 1 according to this exemplary embodiment includes a left case 110 and a right case 120. The left case 110 and the right case 120 are connected at the center by a hinge mechanism or the like. Hereafter, the left case 110 and the right case 120 are also called respective cases together. The respective cases includes a left display 111 and a right display 121 which are touch panel displays, respectively. Hereafter, the left display 111 and the right display 121 are also called respective displays together. In addition, the dual-screen portable terminal 1 includes a stylus pen 130 as a pointing device which points the arbitrary point on the respective displays.

Further, "right" and "left" described here are something expedient for identifying the respective display, and it does not still interfere to describe top and bottom or the like. The dual-screen portable terminal 1 are constituted so that the hinge mechanism part can be moved rotationally in the arrow direction in Fig. 1. The dual-screen portable terminal 1 can perform the spreading display by the left display 111 and the right display 121 when it opens 180 degrees. It is possible to fold the dual-screen portable terminal 1 when it is closed.

The dual-screen portable terminal 1 includes a CPU, a memory and so on which are not illustrated in the external appearance example of Fig. 1. In addition, the dual-screen portable terminal 1 also includes embedded software program or the like for utilizing the physical hardware such as CPU and memory. Furthermore, in the dual-screen portable terminal 1, a control unit 100 is constructed by the cooperation of these hardware and software.

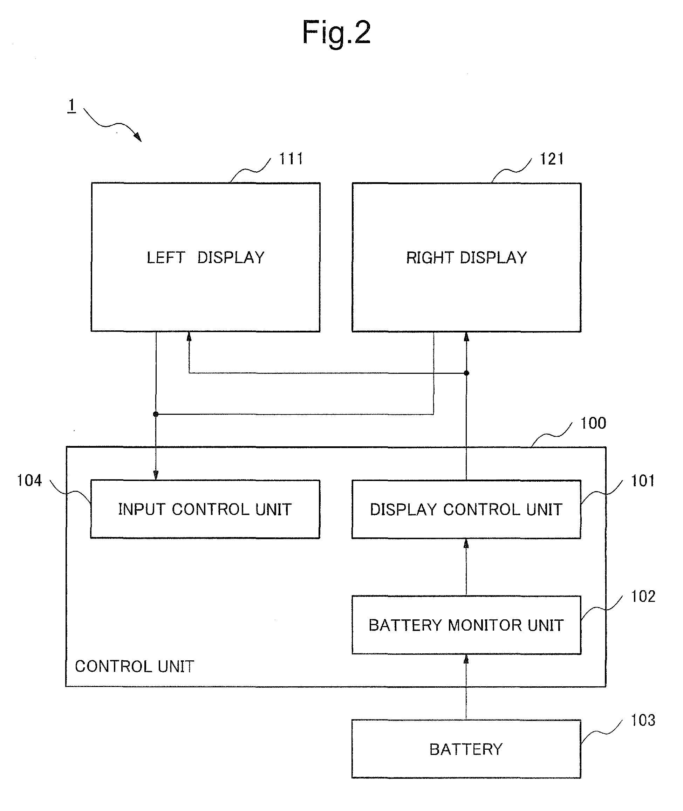

The functional constitution of this exemplary embodiment is shown in Fig. 2.

The dual-screen portable terminal 1 includes the control unit 100 which controls the whole of the terminal and a battery 103 which supplies the electric power to the whole of the terminal in addition to the left display 111 and the right display 121 shown in Fig. 1. The control unit 100 includes a display control unit 101, a battery monitor unit 102 and an input control unit 104.

The display control unit 101 performs the control which visually indicates an arithmetic operation result by the control unit 100 and a control result using the left display 111 and/or the right display 121. In addition, the display control unit 101 performs the energy saving screen display in consideration of the remaining amount of the battery 103 mentioned later.

The battery monitor unit 102 includes the function to watch the remaining amount of the battery 103. When it detects the remaining amount which has declined no more than the predetermined remaining amount, the battery monitor unit 102 transmits it to the display control unit 101. The predetermined remaining amount may be divided into a plurality of levels such as no more than 50% and no more than 30%. The battery monitor unit 102 may be constructed so that it can always inform the remaining amount to the display control unit 101.

As concrete methods for monitoring the remaining amount of the battery 103, the various methods which are known among persons skilled in the art such as a method to watch the voltage variation and a method to measure the terminal utilization time.

The input control unit 104 analyzes the information (a pointed position and distinguish of single click/double clicks) inputted by the touch panel function of the left display 111 and/or the right display 121, and controls the informing operation to the control unit 104 as an input by the user.

The left display 111 and the right display 121 are touch panel displays and visually indicate the arithmetic operation results and control results by the control unit 104. Specifically, by a graphical user interface, it is able to display a desktop screen on both screens, and display the desktop in one side and the application window in the other side of the full screen. The same application windows may be spread on both screens and different applications are also allowable.

Although LCD, an organic EL display or the like can be used, the left display 111 and the right display 121 adopt organic EL in this exemplary embodiment.

A procedure of screen display control by the dual-screen portable terminal 1 including aforementioned constitution will be described.

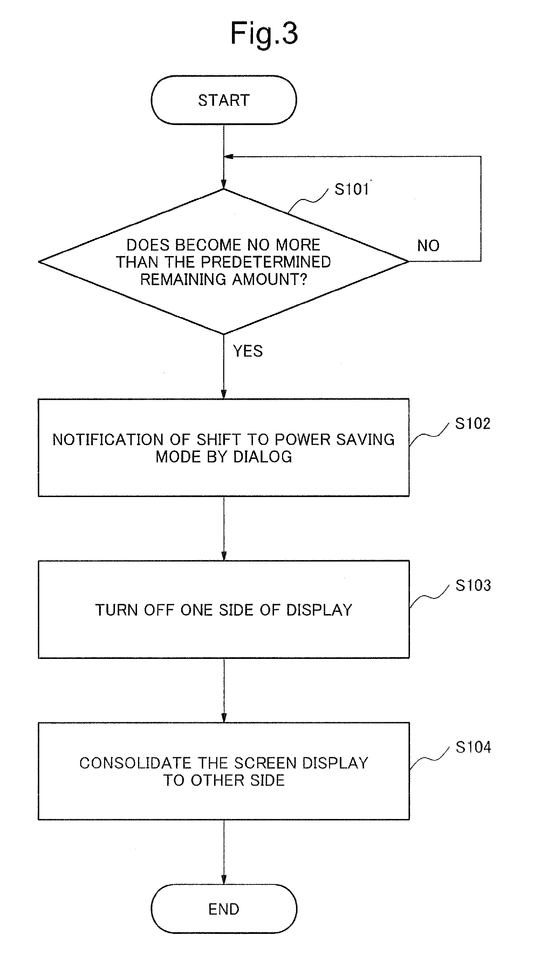

A procedure of the energy saving screen display control in consideration of the remaining amount of the battery 103 in this exemplary embodiment is shown in Fig. 3. Further, as far as there is no reference in particular, a subject of each processing shown in Fig. 3 belongs to the display control unit 101.

First, starting of energy saving screen display control is set in stand-by until the display control unit 101 receives the notice that the battery residual quantity of the battery 103 has been no more than the predetermined remaining amount from the battery monitor unit 102, (Step S101). Here, for example, the predetermined remaining amount can be set 50%, 30% or the like arbitrarily.

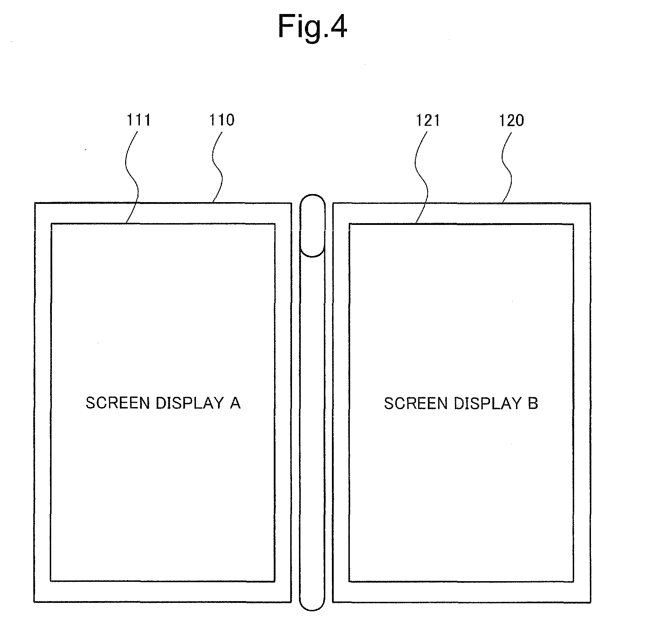

A screen example of display before starting of such energy saving screen display control is shown in Fig. 4.

A screen display A is displayed on the left display 111 and a screen display B is displayed on the right display 121 respectively as illustrated. Applications which the screen display A and the screen display B indicate may be the same or different. Hereinafter, it will be described based on a screen display example in which the transition of a display screen according to this exemplary embodiment is shown in Fig. 4.

In Fig. 3, the display control unit 101 notifies the user the shifts to the energy saving display mode by a dialogue when the display control unit 101 receives the notice that the battery residual quantity has been no more than the predetermined remaining amount. (Step S 102).

The dialog may be the arrangement of the lights-out button which turns off the display when it is pushed on a foreground of each display screen.

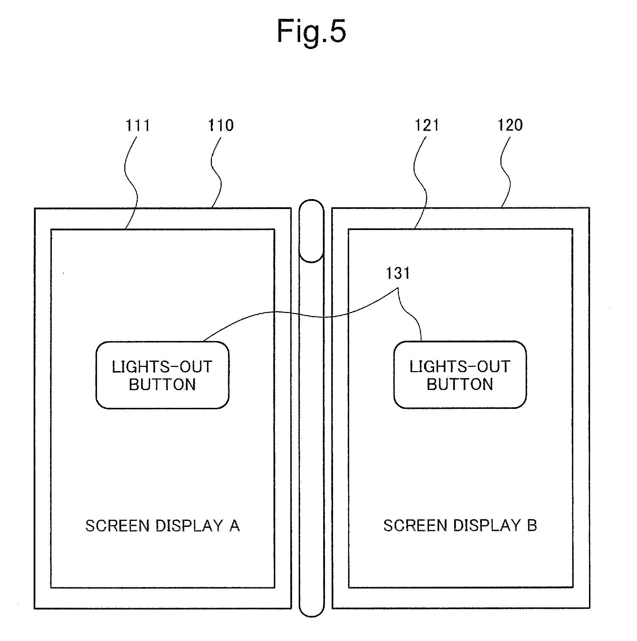

A screen example of the display in which such dialogue has been indicated is shown in Fig. 5.

In Fig. 5, a lights-out button 131 is arranged in a foreground of each display screen respectively. The display of the side where the lights-out button 131 was pointed turns off by the user pointing the lights-out button 131 with using the stylus pen 130.

In Fig. 3, the display control unit 101 receives "the information of the display on the side where the lights-out button 131 is pointed to'" from the input control unit 104, and turns off the display (Step S103). Further, the display control unit 101 may be constructed so as to turn off the right display 121 in default for example when the point of the lights-out button 131 by the user is not detected during a certain time.

Next, the display control unit 101 performs the processing which consolidates the screen displays in the other side display and display (Step S104). The consolidation mode of the screen display can adopt the following various modes. The first mode is the mode which is displayed after arranged in top and bottom or left and right while kept the aspect ratio of the screen display. The second mode is the mode is divided a screen into two in top and bottom and displays after arranged in left and right while broken the aspect ratio of the screen display. The third mode is the mode that the float window is constructed so that the screen display of the display which does not turn off may be kept and performed the screen display of the display which turns off in the float window. As the fourth consolidation mode, the display control unit 101 may be constructed so that the screen may turn off when there is the screen in the state that no application window is displayed (the state that a desktop screen is indicated) in either display.

The first above-mentioned consideration mode includes the merit that the aspect ratio des not change although the display becomes smaller than that before the consolidation. The second consolidation mode includes the merit that the display can use the available area to the maximum, which is efficient. Although the screen display of the display of the side that was turned off becomes small, the third consolidation mode includes the merit that the screen display does not change largely before the consolidation.

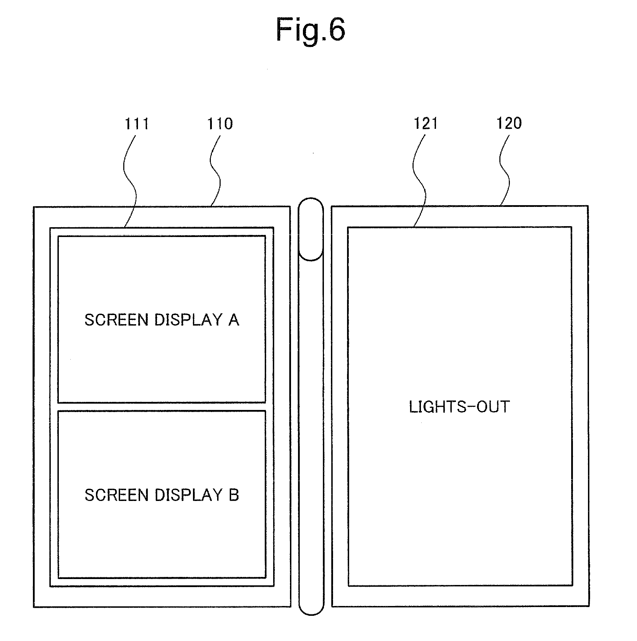

The screen display example is shown in Fig. 6 which keeps the display of the left display 111 without turning off, divides the screen of the left display 111 into two in the top and bottom and displays the dual-screen displays in the top and bottom arrangement. As illustrated, since the lights-out button 131 is pressed, the right display 121 turns off.

It will finish describing a procedure of the energy saving screen display control in consideration of the remaining amount of the battery 103 in this exemplary embodiment.

According to this exemplary embodiment, the time until the terminal becomes completely unusable can be prolonged by turning off the one side according to the battery residual quantity. On the other hand, the screen display of both screens can be continuously watched by consolidating the screen display at the case of the turning off, and the inconvenience caused by the turning off can be absorbed to some extent. Therefore, according to this exemplary embodiment, the usability is improved.

According to this exemplary embodiment, as shown in Fig. 5, it indicates a dialogue which makes the user select the display which turns off on the display screen of each display before turning off any one of two displays. Hence, because a user can select the arbitral screen to be turned off instead of the display to be turned off is selected by the one side judgment of the terminal, it can respond to the user needs appropriately.

This exemplary embodiment is not limited to the above-mentioned description examples, and various modified implementations are possible. For example, lights-out processing (Step S103) and consolidation processing (Step S104) in a flow chart of Fig. 3 may be carried out after the replacement.

Besides, the display which does not turn off may be set in a monochrome mode when the battery residual quantity becomes no more than the predetermined remaining amount furthermore after carrying out the lights-out processing and the consolidation processing by this exemplary embodiment. In this case, the time until a terminal becomes disable any more, can be prolonged furthermore. Especially, the monochrome mode can reduce the more power consumption and the prolonging effect is more remarkable than the collar mode because the device emits the light by itself when organic EL is adopted as a device of each display,

Further, the order of the monochrome operation and the single-screen operation which are above-mentioned may be reversed. In addition to the monochrome operation and the single-screen operation, the brightness control may be carried out. When the battery residual quantity becomes no more than the predetermined remaining amount, the display control unit 101 carries out the control to decrease the brightness of the left display 111 and/or the right display 121. The power consumption is reduced by decreasing the brightness and it contributes to prolong the utilization time.

Besides, the dialogue which asks "How many hours terminal will be used since now ?" may be indicated for the user instead of indicating the lights-out button 131 simply at the notification processing (Step S102 of Fig. 3) that it shifts to the energy saving display mode according to this exemplary embodiment. In other words, that is a dialogue which asks the user the rough utilization time that the user hopes. The control unit 100 calculates about the user's answer (utilization time) for the dialogue and the available time according to the battery residual quantity. And the display control unit 101 carries out the monochrome operation/single-screen operation/brightness control based on the calculation result. According to this configuration, the display control corresponding to the user needs appropriately becomes possible.

Further, this application insists on priority based on Japanese patent application number Japanese Patent Application No. 2010-207005 for which it filed an application on September 15th, 2010 and takes everything of the disclosure here.

**DESCRIPTION OF THE REFERENCE NUMERALS**

| | |
|---|---|
| 1 | Dual-screen portable terminal |
| 100 | Control unit. |
| 101 | Display control unit. |
| 102 | Battery monitor unit. |
| 103 | Battery. |
| 104 | Input control unit. |
| 110 | Left case. |
| 111 | Left display. |
| 120 | Right case. |
| 121 | Right display. |
| 130 | Stylus pen. |
| 131 | Li ghts-off button. |

## Claims

1. A portable terminal which is a portable terminal including two displays,
**characterized by** including a display control unit which performs a control that turns off any one of said two displays when the battery residual quantity becomes no more than the predetermined remaining amount and performs a consolidating display of a display screen of the display that was turned off together with a display screen of the display that was not turned off.

2. A portable terminal according to claim 1 **characterized in that** said display control unit performs a control that indicates a dialogue which makes a user select the display which turns off on the display screen of each display before turning off any one of said two displays.

3. A portable terminal according to claim 1 or 2 **characterized in that** said display control unit indicates a dialogue which asks the time for the user to use a terminal before turning off any one of said two displays, and performs a display control according to an answer for the dialogue.

4. A portable terminal according to any one of claims 1 to 3 **characterized in that** said consolidating display dividing a screen of said display which was not turned off into two, arranging display screens of said two displays and displaying them.

5. A control method which is a control method of a portable terminal including two displays,
**characterized by** including a processing to turn off any one of said two displays when the battery residual quantity becomes no more than the predetermined remaining amount,
and a processing to performs a consolidating display of a display screen of the display that was turned off together with a display screen of the display that was not turned off.

6. A control program which is a control program of a portable terminal including two displays,
characterized to make said portable terminal carry out a processing to turn off any one of said two displays when the battery residual quantity was no more than the predetermined remaining amount,
and a processing to performs a consolidating display of a display screen of the display that was turned off together with a display screen of the display that was not turned off.
